# EUROPEAN PATENT APPLICATION

(11) **EP 4 773 543 A1**
(43) Date of publication of application: **08.07.2026**
(21) Application number: 25225752.2
(22) Date of filing: 19.12.2025
(51) Int. Cl.: H04L 9/08, H04B 10/079, H04B 10/564

(54) **QKD DEVICE, QKD SYSTEM, QKD CONTROL METHOD, AND COMPUTER-READABLE MEDIUM**

(30) Priority: 06.01.2025 JP 2025000117
(71) Applicant: Kabushiki Kaisha Toshiba, Kawasaki-shi, Kanagawa 212-0013 (JP); Toshiba Digital Solutions Corporation, Kawasaki-shi, Kanagawa 212-0013 (JP)
(72) Inventor: MURAKAMI, Akira, Kawasaki-shi (JP)
(74) Representative: Marks & Clerk LLP

(57) **Abstract**

According to an arrangement, a QKD device (2) includes a detection unit (21), a monitoring unit (24), and a switching control unit (25). The detection unit (21) is configured to detect a quantum signal by photons transmitted from a transmitting quantum key distribution (QKD) device. The monitoring unit (24) is configured to monitor monitoring information including a parameter based on the quantum signal. The switching control unit (25) is configured to transmit, to the transmitting QKD device (1), a switching signal for switching from a normal mode to a debug mode for enhancing intensity of the quantum signal by a predetermined value, based on the monitoring information.

## Description

### FIELD

The present disclosure relates to a QKD device, a QKD system, a QKD control method, and a computer-readable medium.

### BACKGROUND

Quantum Key distribution technology (hereinafter referred to as QKD) is a technology for securely sharing an encryption key between a transmission device that continuously transmits a single photon and a reception device that receives a single photon, which are connected by an optical fiber. An encryption key shared by the QKD is guaranteed not to be eavesdropped based on the principle of quantum mechanics. It is guaranteed by information theory that data subjected to encrypted data communication using a cryptographic communication method called a one-time pad by using a shared encryption key cannot be decrypted by an eavesdropper having any knowledge.

### BRIEF DESCRIPTION OF THE DRAWINGS

Fig. 1 is a diagram illustrating an example of a device configuration of a QKD system according to a first arrangement;
Fig. 2 is a diagram illustrating an example of functional configurations of main units of a transmission device and a reception device according to the first arrangement;
Fig. 3 is a flowchart illustrating an example of a process of switching to a debug mode in the reception device according to the first arrangement;
Fig. 4 is a flowchart illustrating an example of a process of switching to a debug mode in the transmission device according to the first arrangement;
Fig. 5 is a flowchart illustrating an example of a process of preparing for switching to a normal mode in the reception device according to the first arrangement;
Fig. 6 is a flowchart illustrating an example of a process of preparing for switching to a normal mode in the transmission device according to the first arrangement;
Fig. 7 is a flowchart illustrating an example of a process of switching to a normal mode in the reception device according to the first arrangement;
Fig. 8 is a flowchart illustrating an example of a process of switching to a normal mode in the transmission device according to the first arrangement;
Fig. 9 is a diagram illustrating an example of functional configurations of main units of a transmission device and a reception device according to a second arrangement; and
Fig. 10 is a diagram illustrating an example of hardware configurations of the transmission device and the reception device according to the first and second arrangements.

### DETAILED DESCRIPTION

According to an arrangement, a QKD device includes a detection unit, a monitoring unit, and a switching control unit. The detection unit is configured to detect a quantum signal by photons transmitted from a transmitting quantum key distribution (QKD) device. The monitoring unit is configured to monitor monitoring information including a parameter based on the quantum signal. The switching control unit is configured to transmit, to the transmitting QKD device, a switching signal for switching from a normal mode to a debug mode for enhancing intensity of the quantum signal by a predetermined value, based on the monitoring information.

Hereinafter, arrangements of a QKD device, a QKD system, a QKD control method, and a program will be described in detail with reference to the accompanying drawings.

Hereinafter, an encryption key exchange device using a quantum key distribution (QKD) technology is referred to as a QKD device. An encryption key exchange system including a plurality of QKD devices is referred to as a QKD system. First, an example of a QKD system according to the first arrangement will be described.

### First Arrangement

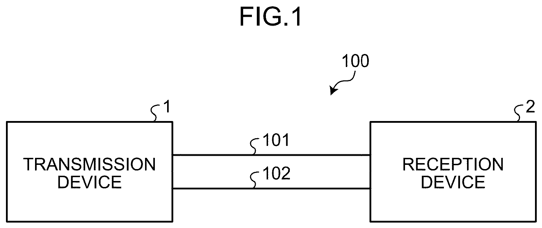

Fig. 1 is a diagram illustrating an example of a device configuration of a QKD system 100 according to the first arrangement. The QKD system 100 according to the first arrangement includes a transmission device 1, a reception device 2, and two optical fibers 101 and 102.

The transmission device 1 is a transmitting QKD device. The transmission device 1 generates a photon, encodes encryption key information indicating bit information of 0 or 1 in the photon, and transmits the photon encoded with the encryption key information to the reception device 2.

The reception device 2 is a receiving QKD device. The reception device 2 receives the photon sent from the transmission device 1 and decodes the encryption key information.

The optical fiber 101 is used as a quantum communication path for transmitting quantum signals encoded with encryption key information.

The optical fiber 102 is used as a classical communication path for transmitting a classical signal including QKD control information. For example, the classical communication path is used for transmission of a synchronization signal between a transmitter of photons used by the transmission device 1 and the reception device 2 of photons used by the reception device 2, and an optical signal such as data communication.

Since the quantum signal in the quantum communication path is very weak (one-photon level per pulse) as compared with the optical signal in the classical communication path, the optical fibers 101 and 102 which are physically different are usually used for the quantum communication path and the classical communication path. In addition, in order to transmit a signal dedicated to the QKD device, the optical fiber 101 of the quantum communication path and the optical fiber 102 of the classical communication path need to be dark fibers.

### Example of Functional Configuration

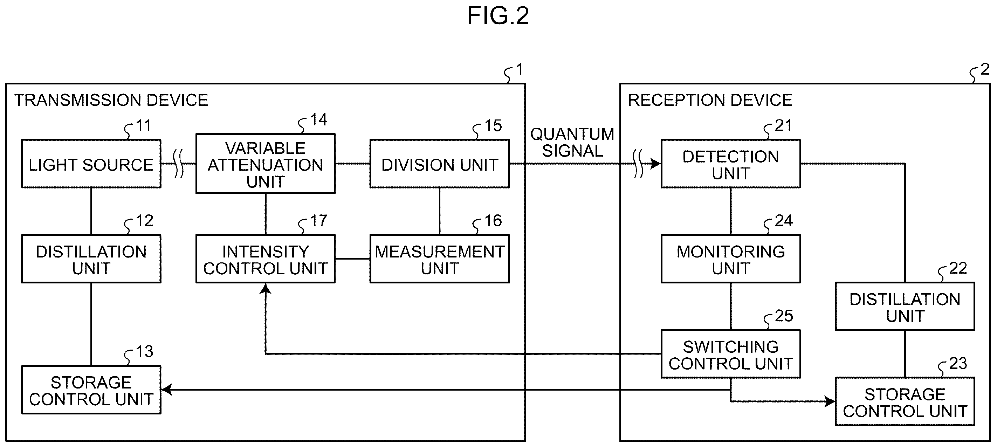

Fig. 2 is a diagram illustrating an example of functional configurations of main units of a transmission device 1 and a reception device 2 according to the first arrangement. The transmission device 1 includes a light source 11, a distillation unit 12, a storage control unit 13, a variable attenuation unit 14, a division unit 15, a measurement unit 16, and an intensity control unit 17. The reception device 2 includes a detection unit 21, a distillation unit 22, a storage control unit 23, a monitoring unit 24, and a switching control unit 25.

Note that communication between the transmission device 1 and the reception device 2 is performed by the above-described optical fibers 101 and 102, but functional units related to the communication interface are omitted in the example of Fig. 2.

First, an example of a functional configuration of a main part of the transmission device 1 will be described.

The light source 11 generates a quantum signal by photons transmitted to the reception device 2 (receiving QKD device). The light source 11 inputs a quantum signal by photons to the variable attenuation unit 14. In the quantum state of the photon, encryption key information indicating bit information of 0 or 1 is encoded. The same encryption key information as the encryption key information transmitted to the reception device 2 is input to the distillation unit 12.

The distillation unit 12 corrects an error in the encryption key information generated between the transmission device 1 and the reception device 2 by error correction processing on the basis of the encryption key information shared with the reception device 2. Further, the distillation unit 12 performs confidentiality enhancement processing corresponding to information compression for canceling information that may have been intercepted by an eavesdropper among the encryption key information.

The transmission device 1 and the reception device 2 can share an encryption key that is guaranteed not to be eavesdropped by the processes of the distillation units 12 and 22. The processes from the error correction processing to the confidentiality enhancement processing are collectively referred to as a key distillation processing.

The encryption key (encryption key information subjected to the key distillation processing) shared between the transmission device 1 and the reception device 2 is stored in a storage device such as a hard disk drive (HDD) by the storage control unit 13 and the storage control unit 23. The encryption key shared between the transmission device 1 and the reception device 2 is used when data encryption communication is performed between the transmission device 1 and the reception device 2 or between applications operating in devices connected to the transmission device 1 and the reception device 2.

The variable attenuation unit 14 controls the intensity of the quantum signal by attenuating the quantum signal by photons according to the control of the intensity control unit 17.

The division unit 15 divides the quantum signal by photons into a quantum signal transmitted to the reception device 2 and a quantum signal input to the measurement unit 16. Specifically, the division unit 15 branches one input optical signal (quantum signal) into two optical signals at a predetermined branching ratio (for example, 50:50). One optical signal is output to the reception device 2, and the other optical signal is output to the measurement unit 16. The division unit 15 is realized by, for example, a beam splitter or the like.

Note that the predetermined branching ratio may be arbitrary, but in general, by setting the branching ratio to 50:50, it is possible to prevent manufacturing errors in the process of attaching the division unit 15 (for example, a mistake or the like of installing at a reverse ratio). In addition, by increasing the quantum signal intensity branched to the measurement unit 16 such as 1:99, the measurement sensitivity required for the measurement unit can be suppressed low.

The measurement unit 16 measures the intensity of the quantum signal input from the division unit 15, and inputs the measurement result to the intensity control unit 17.

The intensity control unit 17 performs attenuation control of the variable attenuation unit 14 on the basis of the measurement result input from the measurement unit 16. In addition, the intensity control unit 17 performs attenuation control of the variable attenuation unit 14 on the basis of a switching signal from the switching control unit 25 of the reception device 2.

Next, an example of a functional configuration of a main unit of the reception device 2 will be described.

The detection unit 21 detects the quantum signal by photons transmitted from the transmission device 1 by an avalanche photodiode (APD). The detection unit 21 decodes encryption key information indicating bit information of 0 or 1 from the quantum state of photons, and inputs the encryption key information to the distillation unit 22.

Since the distillation unit 22 and the storage control unit 23 are similar to the distillation unit 12 and the storage control unit 13 of the transmission device 1, description thereof is omitted.

The monitoring unit 24 monitors monitoring information including at least one parameter to be monitored. The parameter to be monitored includes, for example, the APD count rate of the detection unit 21.

In addition, for example, the parameter to be monitored includes a quantum bit error rate (QBER) of an encryption key generated from the quantum signal. In addition, for example, the parameters to be monitored include a sample QBER (estimated QBER) calculated from some data obtained in the process of generating an encryption key from a quantum signal before the QBER is calculated. Note that, in a case where the sample QBER is used, there is real-time property compared to the QBER finally obtained from the encryption key information after the key distillation processing.

In addition, for example, the parameter to be monitored includes at least one of a decoy counter rate of a decoy signal (deceptive signal) having no bit information indicating 0 or 1 and a QBER of the decoy signal.

Here, the decoy signal will be described. In order to increase the safety of the QKD system 100, a scheme called a decoy system may be used. In the decoy system, the quantum signal includes a decoy signal.

For example, the intensity of the decoy signal is weaker than the intensity of a normal quantum signal having bit information indicating 0 or 1. In addition, for example, the intensity of the decoy signal is stronger than the intensity of a normal quantum signal. The intensity of the decoy signal varies depending on the QKD system 100, but may combine both a decoy signal with an intensity weaker than that of a normal quantum signal and a decoy signal with an intensity stronger than that of a normal quantum signal.

In a case where the QBER of the encryption key generated from the quantum signal increases, a decrease in the number of the decoy signals detected and an increase in the QBER of the decoy signal also occur. Therefore, in a case where the decoy system is used in the QKD system 100, at least one of a decoy count rate indicating the number of decoy signals detected per unit time and QBER of the decoy signal may be included as the monitoring information.

The monitoring unit 24 inputs a monitoring signal based on the monitoring information to the switching control unit 25.

The switching control unit 25 performs switching control of the operation mode of the QKD system 100 on the basis of the monitoring signal from the monitoring unit 24. The operation mode of the QKD system 100 includes a normal mode and a debug mode.

In the normal mode, the encryption key information obtained by the key distillation processing described above is stored in the storage control units 13 and 23.

In the debug mode, control is performed to increase the intensity of the quantum signal by a predetermined value. Specifically, the switching control unit 25 transmits a switching signal from the normal mode to the debug mode to the intensity control unit 17 of the transmission device 1.

The intensity of the quantum signal in the debug mode is such that the intensity of the quantum signal transmitted from the transmission device 1 is greater than one photon per pulse. That is, in the debug mode, the detection unit 21 of the reception device 2 improves the probability that a plurality of photons is included in one pulse.

Note that the switching signal from the normal mode to the debug mode may include an instruction to increase the intensity of the quantum signal by a predetermined value, or the predetermined value may be determined in advance by setting of the transmission device 1 or the like.

In addition, when switching to the debug mode, the switching control unit 25 transmits a discard signal including an instruction to discard the encryption key information obtained by the key distillation processing described above to the storage control units 13 and 23. When receiving the discard signal from the switching control unit 25, the storage control units 13 and 23 discard the encryption key information obtained by the key distillation processing described above without storing the encryption key information in the storage device. As a result, since the encryption key shared is not used if the encryption key is in a state in which the probability that a plurality of photons is included in one pulse is increased, theoretical safety of quantum cryptography can be guaranteed.

### Example of QKD Control Method

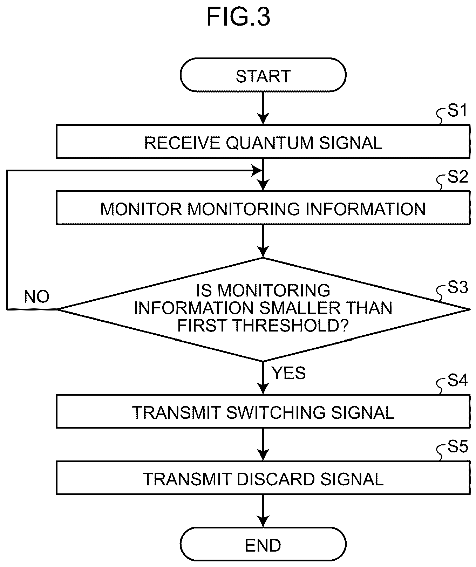

Fig. 3 is a flowchart illustrating an example of a process of switching to a debug mode in the reception device 2 according to the first arrangement. First, the detection unit 21 detects the quantum signal transmitted from the transmission device 1 (Step S1).

Next, the monitoring unit 24 monitors the monitoring information of the detection unit 21 (Step S2). The monitoring information includes at least one parameter to be monitored. In the example of Fig. 3, a case where the parameter to be monitored is the APD count rate will be described.

Next, the monitoring unit 24 determines whether or not the monitoring information monitored in step S2 is smaller than a first threshold (Step S3). For example, the APD count rate decreases due to an external factor or the like, but as the APD count rate decreases, it becomes more difficult to maintain a normal operation by feedback control in the normal mode. If it becomes difficult to maintain the normal operation, the transmission device 1 and the reception device 2 perform an abnormal operation such as repeating restart.

As the first threshold, for example, a minimum value of the APD count rate allowed in the feedback control in the normal mode is set.

Note that the feedback control that refers to the APD count rate includes, for example, control of adjusting the synchronization clock timing between transmission and reception to maximize the APD count rate.

Examples of external factors that affect the APD count rate are as follows, for example.
- Change in timing of arrival of a quantum signal due to shake of the optical fiber 101, temperature change of the optical fiber 101, and the like
- Change in polarization state of quantum signal (example of quantum state) due to shake of optical fiber 101 or the like
- Change in path difference inside interferometer due to internal temperature of the reception device 2

In a case where the monitoring information is the first threshold or more (Step S3, No), the process returns to Step S2.

In a case where the monitoring information is smaller than the first threshold (Step S3, Yes), the switching control unit 25 transmits a switching signal from the normal mode to the debug mode to the intensity control unit 17 of the transmission device 1 (Step S4).

Next, the switching control unit 25 transmits the discard signal including the instruction to discard the encryption key information obtained by the key distillation processing described above to the storage control units 13 and 23 (Step S5).

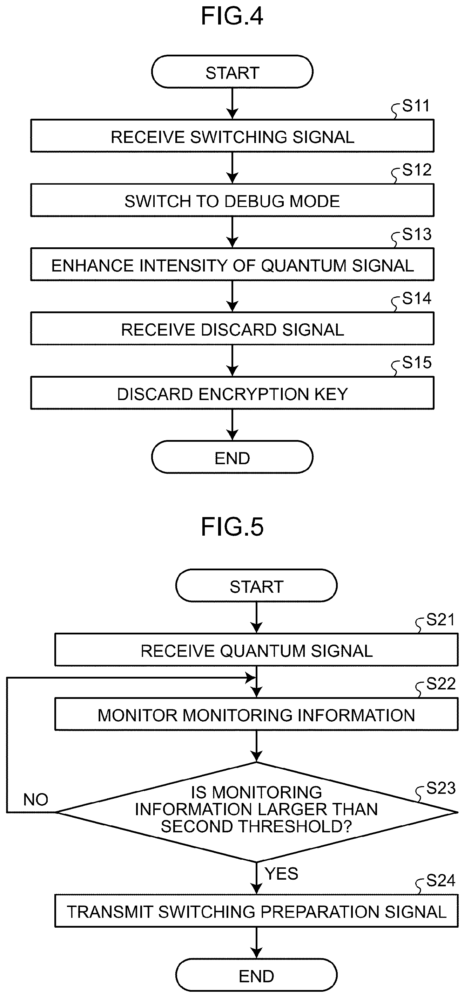

Fig. 4 is a flowchart illustrating an example of a process of switching to the debug mode in the transmission device 1 according to the first arrangement. First, the intensity control unit 17 receives a switching signal from the normal mode to the debug mode from the switching control unit 25 of the reception device 2 (Step S11).

Next, the intensity control unit 17 switches the operation mode to the debug mode (Step S12).

Next, the variable attenuation unit 14 enhances the intensity of the quantum signal (Step S13). For example, the variable attenuation unit 14 performs attenuation control so as to enhance the intensity of the quantum signal by light by a predetermined value or a value specified by the switching signal.

Next, when receiving the discard signal from the reception device 2 (Step S14), the storage control unit 13 discards the encryption key information obtained by the key distillation processing described above without storing the encryption key information in the storage device (Step S15).

Note that the threshold determination in Step S3 described above is an example, and the threshold determination method may be any method according to the parameter to be monitored. For example, when at least one of the above-described QBER and estimated QBER is larger than a third threshold, the switching control unit 25 may transmit, to the transmission device 1 (transmitting QKD device), a switching signal for switching from the normal mode to the debug mode. Furthermore, for example, in a case where the decoy system is used in the QKD system 100, the switching control unit 25 may transmit the switching signal for switching from the normal mode to the debug mode to the transmission device 1 (transmitting QKD device) in a case where the decoy counter rate is smaller than the fourth threshold or in a case where the QBER of the decoy signal is larger than the fifth threshold.

In addition, for example, in the threshold determination, it may be determined that the parameter to be monitored becomes larger (or smaller) than the threshold a predetermined number of times. In addition, for example, in the threshold determination, it may be determined that the average of the parameter to be monitored becomes larger (or smaller) than the threshold. In addition, for example, in the threshold determination, it may be determined that the fluctuation range of the parameter to be monitored becomes larger than the threshold.

Fig. 5 is a flowchart illustrating an example of a process of preparing for switching to a normal mode in the reception device 2 according to the first arrangement. First, the detection unit 21 detects the quantum signal transmitted from the transmission device 1 (Step S21).

Next, the monitoring unit 24 monitors the monitoring information of the detection unit 21 (Step S22). The monitoring information includes at least one parameter to be monitored. In the example of Fig. 5, a case where the parameter to be monitored is the APD count rate will be described.

Next, the monitoring unit 24 determines whether or not the monitoring information monitored in step S22 is larger than a second threshold (Step S23). For example, in the case of the APD count rate, the second threshold is set on the basis of the value of the APD count rate assumed in a case where the above-described external factor or the like is eliminated.

Note that the threshold determination in Step S23 is an example, and the threshold determination method may be any method according to the parameter to be monitored. For example, in the threshold determination, it may be determined that the parameter to be monitored becomes larger (or smaller) than the threshold a predetermined number of times. In addition, for example, in the threshold determination, it may be determined that the average of the parameter to be monitored becomes larger (or smaller) than the threshold. In addition, for example, in the threshold determination, it may be determined that the fluctuation range of the parameter to be monitored becomes smaller than the threshold.

In a case where the monitoring information is the second threshold or smaller (Step S23, No), the process returns to Step S22.

In a case where the monitoring information is larger than the second threshold (Step S3, Yes), the switching control unit 25 transmits, to the intensity control unit 17 of the transmission device 1, a switching preparation signal for shifting to a switching (return) preparation period to the normal mode (step S24).

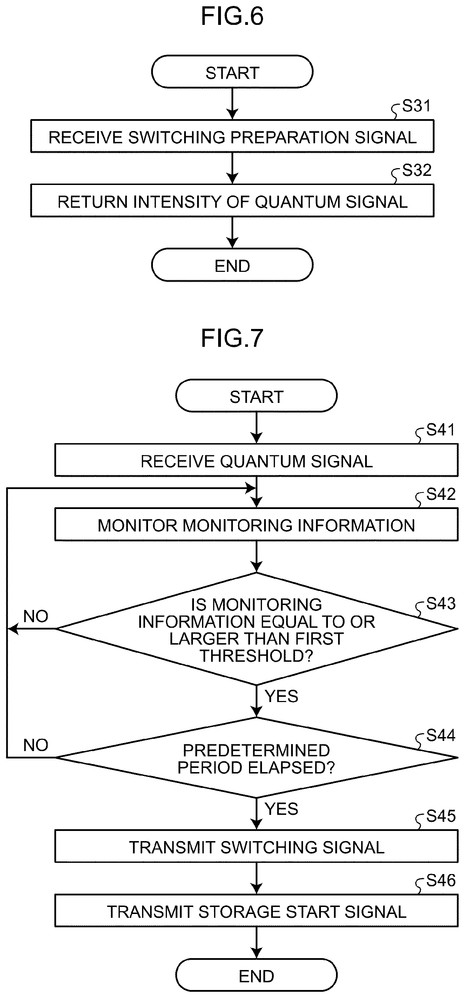

Fig. 6 is a flowchart illustrating an example of a process of preparing for switching to a normal mode in the transmission device 1 according to the first arrangement. First, the intensity control unit 17 receives a switching preparation signal for shifting to a switching preparation period to the normal mode from the switching control unit 25 of the reception device 2 (Step S31).

Next, the variable attenuation unit 14 returns the intensity of the quantum signal enhanced in Step S13 described above to the intensity before enhancement (Step S32).

Fig. 7 is a flowchart illustrating an example of a process of switching to a normal mode in the reception device 2 according to the first arrangement. First, the detection unit 21 detects the quantum signal transmitted from the transmission device 1 (Step S41).

Next, the monitoring unit 24 monitors the monitoring information of the detection unit 21 (Step S42). The monitoring information includes at least one parameter to be monitored. In the example of Fig. 7, a case where the parameter to be monitored is the APD count rate will be described.

Note that the parameter to be monitored may be the above-described sample QBER, an encryption key generation speed (for example, secure key rate (SKR)), or the like.

Next, the monitoring unit 24 determines whether or not the monitoring information monitored in Step S42 is equal to or larger than the first threshold described above (Step S43). That is, in Step S43, it is determined whether or not the monitoring information has returned to an assumed value in a case where the above-described external factor has been eliminated. The assumed value is a value set in advance from the performance of the reception device 2, the quantum loss (for example, detection loss of a quantum state due to attenuation of an optical signal), and the like.

Note that the threshold determination in Step S43 is an example, and the threshold determination method may be any method according to the parameter to be monitored. For example, in the threshold determination, it may be determined that the parameter to be monitored becomes larger (or smaller) than the threshold a predetermined number of times. In addition, for example, in the threshold determination, it may be determined that the average of the parameter to be monitored becomes larger (or smaller) than the threshold. In addition, for example, in the threshold determination, it may be determined that the fluctuation range of the parameter to be monitored becomes smaller than the threshold.

Next, the monitoring unit 24 determines whether or not a predetermined period has elapsed after the monitoring information monitored in Step S42 is equal to or larger than the first threshold described above (Step S44). The predetermined period is provided to determine whether or not the state in which the monitoring information is equal to or greater than the first threshold is stably continued.

In a case where the predetermined period has not elapsed (Step S44, No), the process returns to Step S42.

In a case where the predetermined period has elapsed (Step S44, Yes), the switching control unit 25 transmits a switching signal from the debug mode to the normal mode to the intensity control unit 17 of the transmission device 1 (Step S45).

Next, the switching control unit 25 transmits the storage start signal including the instruction to start storing the encryption key information obtained by the key distillation processing described above to the storage control units 13 and 23 (Step S46).

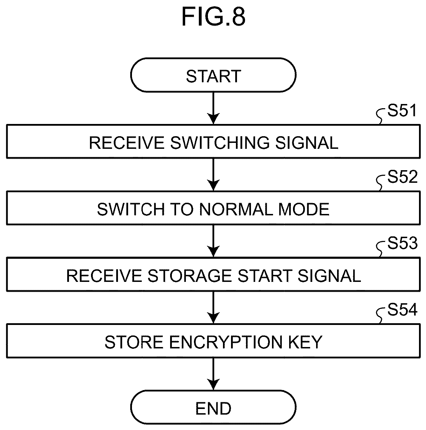

Fig. 8 is a flowchart illustrating an example of a process of switching to the normal mode in the transmission device 1 according to the first arrangement. First, the intensity control unit 17 receives a switching signal from the debug mode to the normal mode from the switching control unit 25 of the reception device 2 (Step S51).

Next, the intensity control unit 17 switches the operation mode to the normal mode (Step S52).

Next, when receiving the storage start signal from the reception device 2 (Step S53), the storage control unit 13 stores the encryption key information obtained by the key distillation processing described above in the storage device (Step S54).

As described above, in the reception device 2 (receiving QKD device) of the arrangement, the detection unit 21 detects a quantum signal by a photon transmitted from the transmission device 1 (transmitting QKD device). The monitoring unit 24 monitors monitoring information including a parameter based on the quantum signal. The switching control unit 25 transmits, to the transmission device 1, a switching signal for switching from the normal mode to a debug mode for enhancing the intensity of the quantum signal by a predetermined value on the basis of the monitoring information.

As a result, according to the reception device 2 of the arrangement, the encryption key generation process using QKD can be more stably performed.

### Second Arrangement

Next, a second arrangement will be described. In the description of the second arrangement, the description similar to that of the first arrangement will be omitted, and portions different from those of the first arrangement will be described. In the second arrangement, a case where the monitoring unit 24 and the switching control unit 25 are in the transmitting QKD device will be described.

### Example of Functional Configuration

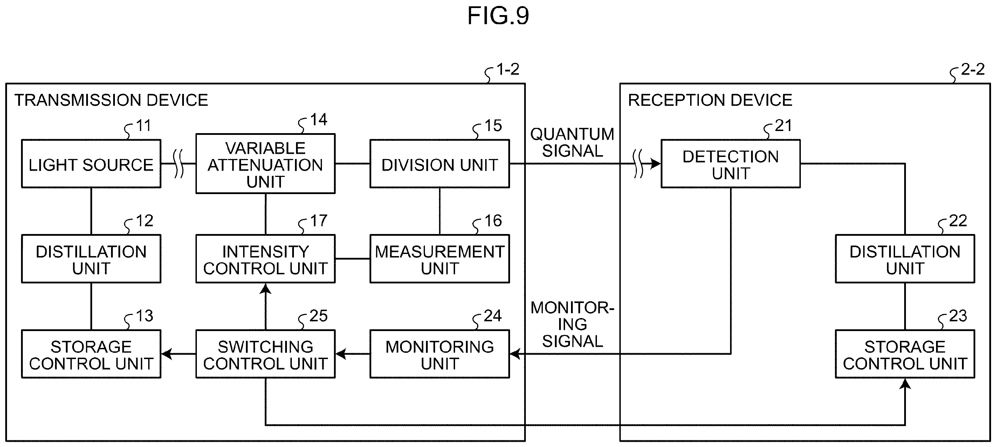

Fig. 9 is a diagram illustrating an example of functional configurations of main units of a transmission device 1-2 and a reception device 2-2 according to the second arrangement. The transmission device 1-2 includes a light source 11, a distillation unit 12, a storage control unit 13, a variable attenuation unit 14, a division unit 15, a measurement unit 16, an intensity control unit 17, a monitoring unit 24, and a switching control unit 25. The reception device 2 includes a detection unit 21, a distillation unit 22, and a storage control unit 23.

Note that communication between the transmission device 1 and the reception device 2 is performed by the above-described optical fibers 101 and 102, but functional units related to the communication interface are omitted in the example of Fig. 9.

First, an example of a functional configuration of a main part of the transmission device 1 will be described.

Since the description of the light source 11, the distillation unit 12, the storage control unit 13, the variable attenuation unit 14, the division unit 15, and the measurement unit 16 of the second arrangement is similar to that of the first arrangement, the description thereof will be omitted.

The intensity control unit 17 performs attenuation control of the variable attenuation unit 14 on the basis of the measurement result input from the measurement unit 16. In addition, the intensity control unit 17 performs attenuation control of the variable attenuation unit 14 on the basis of a switching signal from the switching control unit 25.

The monitoring unit 24 receives monitoring information including at least one parameter to be monitored from the reception device 2 (QKD device on the receiving side). Since the description of the parameter to be monitored is similar to that of the first arrangement, the description thereof will be omitted.

The monitoring unit 24 inputs a monitoring signal based on the monitoring information to the switching control unit 25.

The switching control unit 25 performs switching control of the operation mode of the QKD system 100 on the basis of the monitoring signal from the monitoring unit 24. The operation mode of the QKD system 100 includes a normal mode and a debug mode. Since the descriptions of the normal mode and the debug mode of the second arrangement are similar to those of the first arrangement, the description thereof will be omitted.

In addition, the switching control unit 25 transmits the discard signal including the instruction to discard the encryption key information obtained by the key distillation processing described above to the storage control units 13 and 23. When receiving the discard signal from the switching control unit 25, the storage control units 13 and 23 discard the encryption key information obtained by the key distillation processing described above without storing the encryption key information in the storage device.

### Example of Hardware Configuration

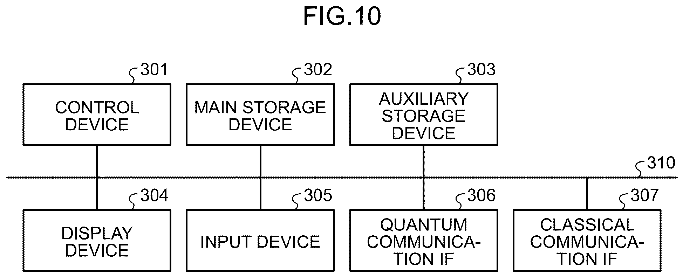

Fig. 10 is a diagram illustrating an example of hardware configurations of the transmission device 1 (1-2) and the reception device 2 (2-2) according to the first and second arrangements. The transmission device 1 and the reception device 2 include a control device 301, a main storage device 302, an auxiliary storage device 303, a display device 304, an input device 305, a quantum communication interface (IF) 306, and a classical communication IF 307.

The control device 301, the main storage device 302, the auxiliary storage device 303, the display device 304, the input device 305, the quantum communication IF 306, and the classical communication IF 307 are connected via a bus 310.

The control device 301 executes a program read from the auxiliary storage device 303 to the main storage device 302. The main storage device 302 is a memory such as a read only memory (ROM) and a random-access memory (RAM). The auxiliary storage device 303 is an HDD, a memory card, or the like.

The display device 304 displays states and the like of the transmission device 1 and the reception device 2. The input device 305 receives an input from the user. Note that the display device 304 and the input device 305 may be realized by a touch panel or the like having a display function and an input function. In addition, the display device 304 and the input device 305 are not necessarily included in the transmission device 1 and the reception device 2. In this case, for example, a display function and an input function of an external terminal connected to the transmission device 1 and the reception device 2 are used.

The quantum communication IF 306 is an interface for connecting to a quantum communication path through which photons are transmitted. The classical communication IF 307 is an interface for connecting to a classical communication path through which control signals are transmitted.

The program executed by the transmission device 1 and the reception device 2 is stored in a computer-readable storage medium such as a CD-ROM, a memory card, a CD-R, and a digital versatile disc (DVD) in a file in an installable format or an executable format, and is provided as a computer program product.

In addition, the program executed by the transmission device 1 and the reception device 2 may be stored on a computer connected to a network such as the Internet and provided by being downloaded via the network.

In addition, the program executed by the transmission device 1 and the reception device 2 may be provided via a network such as the Internet without being downloaded.

In addition, the program executed by the transmission device 1 and the reception device 2 may be provided by being incorporated in a ROM or the like in advance.

The program executed by the transmission device 1 and the reception device 2 has a module configuration including a function that can be realized by the program among the functional configurations of the transmission device 1 and the reception device 2. The control device 301 reads the program from the storage medium such as the auxiliary storage device 303 and executes the program, whereby the function realized by the program is loaded to the main storage device 302. That is, the function realized by the program is generated on the main storage device 302.

Note that some or all of the functions of the transmission device 1 and the reception device 2 may be implemented by hardware such as an integrated circuit (IC). The IC is, for example, a processor that executes dedicated processing.

In addition, in a case where each function is realized by using a plurality of processors, each processor may realize one of the functions or may realize two or more of the functions.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.

Example 1. A QKD device including:
a detection unit configured to detect a quantum signal by photons transmitted from a transmitting quantum key distribution (QKD) device;
a monitoring unit configured to monitor monitoring information including a parameter based on the quantum signal; and
a switching control unit configured to transmit, to the transmitting QKD device, a switching signal for switching from a normal mode to a debug mode for enhancing intensity of the quantum signal by a predetermined value, based on the monitoring information.

Example 2. The device according to Example 1, wherein
the detection unit is configured to detect the quantum signal by an avalanche photodiode (APD),
the monitoring information includes an APD count rate, and
the switching control unit is configured to transmit the switching signal to the transmitting QKD device in a case where the APD count rate is smaller than a first threshold.

Example 3. The device according to Example 2, wherein
in a case where an APD count rate monitored during the debug mode is greater than a second threshold, the monitoring unit is configured to transmit a switching preparation signal for shifting to a switching preparation period for the normal mode to the transmitting QKD device.

Example 4. The device according to Example 3, wherein
in a case where a predetermined period elapses after the APD count rate monitored during the switching preparation period becomes equal to or greater than a first threshold, the monitoring unit is configured to transmit a switching signal for switching from the debug mode to the normal mode to the transmitting QKD device.

Example 5. The device according to any one of Examples 1 to 4, further including:
a storage control unit configured to store, in a storage device, an encryption key generated from a quantum signal received in the normal mode, wherein
the switching control unit is configured to:
   when transmitting a switching signal for switching to the debug mode, further transmit a discard signal including an instruction to discard an encryption key generated from a quantum signal received in the debug mode to the transmitting QKD device; and
   when transmitting a switching signal for switching to the normal mode, further transmit a storage start signal including an instruction to start storing an encryption key generated from a quantum signal received in the normal mode to the transmitting QKD device.

Example 6. The device according to any one of Examples 1 to 4, wherein
intensity of the quantum signal in the debug mode is such that intensity of the quantum signal transmitted from the transmitting QKD device is greater than one photon per pulse.

Example 7. The device according to any one of Examples 1 to 4, wherein
the monitoring information includes a quantum bit error rate (QBER) of an encryption key generated from the quantum signal or an estimated QBER calculated from some data obtained in a process of generating the encryption key from the quantum signal before the QBER is calculated, and
the switching control unit is configured to transmit a switching signal for switching from the normal mode to the debug mode to the transmitting QKD device in a case where at least one of the QBER and the estimated QBER is larger than a third threshold.

Example 8. The device according to any one of Examples 1 to 4, wherein
the quantum signal includes a decoy signal having no bit information indicating 0 or 1,
the monitoring information includes at least one of a decoy count rate indicating a number of the decoy signals detected per unit time and a QBER of the decoy signal, and
the switching control unit is configured to transmit a switching signal for switching from the normal mode to the debug mode to the transmitting QKD device in a case where the decoy count rate is smaller than a fourth threshold or in a case where the QBER of the decoy signal is larger than a fifth threshold.

Example 9. A QKD device including:
a light source configured to generate a quantum signal by photons transmitted to a receiving quantum key distribution (QKD) device;
a monitoring unit configured to receive monitoring information including a parameter based on the quantum signal from the receiving QKD device; and
a switching control unit configured to switch from a normal mode to a debug mode for enhancing intensity of the quantum signal by a predetermined value, based on the monitoring information.

Example 10. A QKD system including:
a light source configured to generate a quantum signal by photons transmitted to a receiving quantum key distribution (QKD) device; and
one or more hardware processors configured to:
   a detection unit configured to detect the quantum signal transmitted from a transmitting QKD device;
   a monitoring unit configured to monitor monitoring information including a parameter based on the quantum signal; and
   a switching control unit configured to switch from a normal mode to a debug mode for enhancing intensity of the quantum signal by a predetermined value, based on the monitoring information.

Example 11. A QKD control method including:
detecting, by a QKD device, a quantum signal by photons transmitted from a transmitting quantum key distribution (QKD) device;
monitoring, by the QKD device, monitoring information including a parameter based on the quantum signal; and
transmitting, by the QKD device, to the transmitting QKD device, a switching signal for switching from a normal mode to a debug mode for enhancing intensity of the quantum signal by a predetermined value, based on the monitoring information.

Example 12. A computer-readable medium including instructions which, when executed by a computer, cause the computer to execute:
detecting a quantum signal by photons transmitted from a transmitting quantum key distribution (QKD) device;
monitoring monitoring information including a parameter based on the quantum signal; and
transmitting, to the transmitting QKD device, a switching signal for switching from a normal mode to a debug mode for enhancing the intensity of the quantum signal by a predetermined value, based on the monitoring information.

## Claims

1. A QKD device (2) comprising:
a detection unit (21) configured to detect a quantum signal by photons transmitted from a transmitting quantum key distribution (QKD) device (1);
a monitoring unit (24) configured to monitor monitoring information including a parameter based on the quantum signal; and
a switching control unit (25) configured to transmit, to the transmitting QKD device (1), a switching signal for switching from a normal mode to a debug mode for enhancing intensity of the quantum signal by a predetermined value, based on the monitoring information.

2. The QKD device (2) according to claim 1, wherein
the detection unit (21) is configured to detect the quantum signal by an avalanche photodiode (APD),
the monitoring information includes an APD count rate, and
the switching control unit (25) is configured to transmit the switching signal to the transmitting QKD device (1) in a case where the APD count rate is smaller than a first threshold.

3. The QKD device (2) according to claim 2, wherein
in a case where an APD count rate monitored during the debug mode is greater than a second threshold, the monitoring unit (24) is configured to transmit a switching preparation signal for shifting to a switching preparation period for the normal mode to the transmitting QKD device (1).

4. The QKD device (2) according to claim 3, wherein
in a case where a predetermined period elapses after the APD count rate monitored during the switching preparation period becomes equal to or greater than a first threshold, the monitoring unit (24) is configured to transmit a switching signal for switching from the debug mode to the normal mode to the transmitting QKD device (1).

5. The QKD device (2) according to any one of claims 1 to 4, further comprising:
a storage control unit (23) configured to store, in a storage device, an encryption key generated from a quantum signal received in the normal mode, wherein
the switching control unit (25) is configured to:
when transmitting a switching signal for switching to the debug mode, further transmit a discard signal including an instruction to discard an encryption key generated from a quantum signal received in the debug mode to the transmitting QKD device (1); and
when transmitting a switching signal for switching to the normal mode, further transmit a storage start signal including an instruction to start storing an encryption key generated from a quantum signal received in the normal mode to the transmitting QKD device (1).

6. The QKD device (2) according to any one of claims 1 to 4, wherein
intensity of the quantum signal in the debug mode is such that intensity of the quantum signal transmitted from the transmitting QKD device (1) is greater than one photon per pulse.

7. The QKD device (2) according to any one of claims 1 to 4, wherein
the monitoring information includes a quantum bit error rate (QBER) of an encryption key generated from the quantum signal or an estimated QBER calculated from some data obtained in a process of generating the encryption key from the quantum signal before the QBER is calculated, and
the switching control unit (25) is configured to transmit a switching signal for switching from the normal mode to the debug mode to the transmitting QKD device (1) in a case where at least one of the QBER and the estimated QBER is larger than a third threshold.

8. The QKD device (2) according to any one of claims 1 to 4, wherein
the quantum signal includes a decoy signal having no bit information indicating 0 or 1,
the monitoring information includes at least one of a decoy count rate indicating a number of the decoy signals detected per unit time and a QBER of the decoy signal, and
the switching control unit (25) is configured to transmit a switching signal for switching from the normal mode to the debug mode to the transmitting QKD device (1) in a case where the decoy count rate is smaller than a fourth threshold or in a case where the QBER of the decoy signal is larger than a fifth threshold.

9. A QKD device (1) comprising:
a light source (11) configured to generate a quantum signal by photons transmitted to a receiving quantum key distribution (QKD) device (2);
a monitoring unit (24) configured to receive monitoring information including a parameter based on the quantum signal from the receiving QKD device (2); and
a switching control unit (25) configured to switch from a normal mode to a debug mode for enhancing intensity of the quantum signal by a predetermined value, based on the monitoring information.

10. A QKD system comprising:
a light source (11) configured to generate a quantum signal by photons transmitted to a receiving quantum key distribution (QKD) device;
a detection unit (21) configured to detect the quantum signal transmitted from a transmitting QKD device (1);
a monitoring unit (24) configured to monitor monitoring information including a parameter based on the quantum signal; and
a switching control unit (25) configured to switch from a normal mode to a debug mode for enhancing intensity of the quantum signal by a predetermined value, based on the monitoring information.

11. A QKD control method comprising:
detecting, by a QKD device (2), a quantum signal by photons transmitted from a transmitting quantum key distribution (QKD) device;
monitoring, by the QKD device (2), monitoring information including a parameter based on the quantum signal; and
transmitting, by the QKD device (2), to the transmitting QKD device (1), a switching signal for switching from a normal mode to a debug mode for enhancing intensity of the quantum signal by a predetermined value, based on the monitoring information.

12. A computer-readable medium comprising instructions which, when executed by a computer, cause the computer to execute:
detecting a quantum signal by photons transmitted from a transmitting quantum key distribution (QKD) device (1) (S1);
monitoring monitoring information including a parameter based on the quantum signal (S2); and
transmitting, to the transmitting QKD device (1), a switching signal for switching from a normal mode to a debug mode for enhancing the intensity of the quantum signal by a predetermined value, based on the monitoring information (S4).
